(19) Europäisches Patentamt
European Patent Office
Office européen des brevets

(11) Veröffentlichungsnummer: **0 263 353 A2**

(12) **EUROPÄISCHE PATENTANMELDUNG**

(21) Anmeldenummer: **87113865.7**

(22) Anmeldetag: **23.09.87**

(51) Int. Cl.⁴: **C08F 222/32**, C08F 220/12, //(C08F222/32,220:12),(C08F220/12,222:32)

(30) Priorität: **03.10.86 DE 3633711**
**11.11.86 DE 3638387**

(43) Veröffentlichungstag der Anmeldung:
**13.04.88 Patentblatt 88/15**

(84) Benannte Vertragsstaaten:
**DE FR GB IT**

(71) Anmelder: **BAYER AG**
**Konzernverwaltung RP Patentabteilung**
**D-5090 Leverkusen 1 Bayerwerk(DE)**

(72) Erfinder: **Meurer, Kurt Peter, Dr.**
**Am Krahfeld 1**
**D-5330 Koenigswinter 21(DE)**
Erfinder: **Waniczek, Helmut, Dr.**
**Wolfskaul 2**
**D-5000 Koeln 80(DE)**
Erfinder: **Ohm, Christian, Dr.**
**Walter-Flex-Strasse 32**
**D-5090 Leverkusen(DE)**
Erfinder: **Witte, Josef, Dr.**
**Haferkamp 10**
**D-5000 Koeln 80(DE)**

(54) **Copolymere aus alpha-Cyanacrylaten und Acrylaten, ihre Herstellung und Verwendung.**

(57) Die Erfindung betrifft Copolymere aus α-Cyanacrylaten und Acrylaten, ihre Herstellung und Verwendung.

EP 0 263 353 A2

## Copolymere aus $\alpha$-Cyanacrylaten und Acrylaten, ihre Herstellung und Verwendung

Die Erfindung betrifft Copolymere aus $\alpha$-Cyanacrylaten und Acrylaten, ihre Herstellung und Verwendung.

Die Copolymeren werden erhalten, wenn man $\alpha$-Cyanacrylate der Formel (I)

$CH_2=$ C COOR$^1$

CN

(I), in welcher

$R^1$ für $C_1$-$C_8$-Alkyl steht oder $R_1$ für $C_1$-$C_8$-Alkyl steht, wobei $R^1$ gegebenenfalls mit einer Gruppe der Formel (III)

$-(R^4O)_n-R^5$ (III),

substituiert sein kann, in welcher

$R^4$ für $C_1$-$C_8$-Alkylen,

$R^5$ für Wasserstoff oder $C_1$-$C_8$-Alkyl steht und

n für eine ganze Zahl von 1 bis 10 steht,

mit Acrylaten der Formel (II)

$CH_2=$ C $-COOR^3$

$R^2$

(II), in welcher

$R^2$ für Wasserstoff oder $C_1$-$C_8$-Alkyl steht und

$R^3$ für $C_1$-$C_8$-Alkyl steht,

wobei $R^3$ gegebenenfalls mit einer Gruppe der Formel (III)

$-(R^4O)_n-R^5$ (III),

substituiert sein kann, in welcher

$R^4$ für $C_1$-$C_8$-Alkylen,

$R^5$ für Wasserstoff oder $C_1$-$C_8$-Alkyl steht und

n für eine ganze Zahl von 1 bis 10, vorzugsweise für eine ganze Zahl von 1 bis 4 steht

copolymerisiert.

Als Alkylreste $R^1$, $R^2$, $R^3$ und $R^5$ seien z.B. Methyl, Ethyl, Propyl, i-Propyl, Butyl, i-Butyl, Pentyl, i-Pentyl, i-Hexyl und Hexyl genannt.

Als Alkylenreste $R^4$ sind z.B. Methylen, Ethylen, Propylen, i-Propylen, Butylen, Pentylen, i-Pentylen, Hexylen und i-Hexylen genannt.

Die Copolymeren umfassen solche aus $\alpha$-Cyanacrylaten der Formel (I) und ($\alpha$-Alkyl)acrylaten der Formel (II).

Folgende Copolymere aus $\alpha$-Cyanacrylat der Formel (I) und Acrylat der Formel (II) seien beispielhaft genannt:

a) 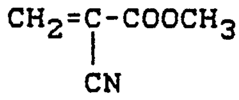 + 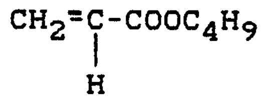

b) 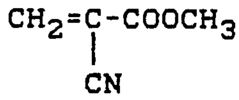 + 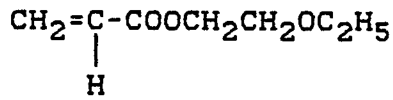

c) 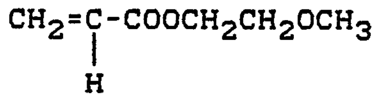 + 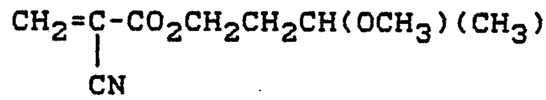

sowie

d) **Terpolymere aus den genannten Monomeren, z.B. aus**

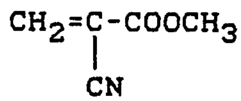 + 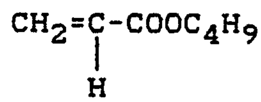 +

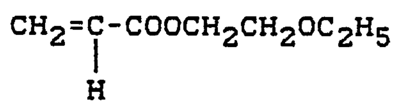

Vorzugsweise werden als α-Cyanacrylate der Formel (I) α-Cyanacrylsäuremethylester und α-Cyanacrylsäureethylester eingesetzt.

Vorzugsweise werden als Acrylate der Formel (II) eingesetzt: Acrylsäuremethylester, Acrylsäureethylester, Acrylsäurebutylester, Acrylsäureethoxyethylester, Acrylsäuremethoxyethylester, Acrylsäuremethoxypropylester und Acrylsäuremethoxybutylester.

Pro Mol α-Cyanacrylat der Formel (I) werden 2,5 bis 100 Mol Acrylat der Formel (II) eingesetzt.

Die Erfindung betrifft weiterhin ein Verfahren zur Herstellung der Copolymeren aus α-Cyanacrylaten der Formel (I) und Acrylaten der Formel (II).

Die Copolymerisation wird als radikalische Polymerisation bei einer Temperatur von 50 bis 120°C in einem aprotischen Lösungsmittel kontinuierlich oder diskontinuierlich unter Inertgas (z.B. $N_2$, Argon usw.) ausgeführt.

Als Starter für die radikalische Polymerisation kommen in Betracht übliche Initiatoren, z.B. Azoinitiatoren und Peroxidinitiatoren in üblichen Mengen, z.B. Azobis-isobutyronitril, t-Butylperpivalat, t-Amylperpivalat, t-Butyl-per-2-ethylhexanoat, Benzoylperoxid, t-Butylperbenzoat, Bis-(4-t-butylcyclohexyl)-peroxidicarbonat, Ditert.-Butylperoxid, Di-Cumylperoxid, Di-Cyclohexylperoxidicarbonat, Di-Laurylperoxid.

Als aprotische Lösungsmittel kommen z.B. aromatische Kohlenwasserstoffe, vorzugsweise Toluol, o-Xylol, m-Xylol, p-Xylol, Benzol, halogenierte aromatische Kohlenasserstoffe wie Chlorbenzol, o-Dichlorbenzol oder Ketone wie z.B. Aceton, Methylethylketon in Betracht.

Acrylatharze und Acrylatlacke in einer Lösungsmittelpolymerisation herzustellen ist bekannt. Ein Verfahren zur Herstellung von Acrylatkautschuken (Acrylatelastomeren) aus Acrylatcopolymeren mit hohen Molgewichten und relativ hohen molekularen Einheitlichkeiten ($U_n = \frac{M_w}{M_n} - 1$ = 1,0-10,0), in einer Lösungspolymerisation ist bisher nicht beschrieben. In der DE-OS 2 040 626 wird nur eine Lösungspolymerisation als Alternative zur Herstellung von Acrylatelastomeren erwähnt.

In der Regel erfolgt die Herstellung von Acrylatkautschuk durch Emulsionspolymerisation in wäßriger Phase. Dabei sind hohe Molgewichte erzielbar. Aufgrund der in Gegenwart von Wasser spontan ablaufenden anionischen Polymerisation von α-Cyanacrylaten (siehe H. Lee, "Cyanacrylat resins - The Instant Adhesives, Chapt. 9, p.56 (1981)) ist die Synthese eines Acrylatkautschuks, der als Comonomer α-Cyanacrylsäureester enthält, mit Hilfe der Emulsionspolymerisation ausgeschlossen.

Ethyliden-Norbornen und (Meth)acrylsäureester, die eine zweite ungesättigte, ethylenische Gruppe enthalten, z.B. Methacrylsäureallylester oder eine Epoxygruppen enthaltende, ethylenische ungesättigte Verbindung, wie z.B. Glycidylmethacrylat, kann als weiteres Comonomer zugesetzt werden. Dieses Comonomer wird vor bzw. während der Polymerisation in Mengen von 0,5 bis 10 Gew.-%, bezogen auf Gesamtmonomer, zugesetzt.

Der Einbau dieses Comonomeren dient zur Einführung von ungesättigten oder reaktiven Gruppen in das Polymerisat. Diese Gruppen dienen zur Verbesserung der Vernetzbarkeit (Vulkanisation) der erfindungsgemäßen Copolymerisate.

Die Polymerisationsreaktion wird durch einmaligen Zusatz bzw. durch sukzessives Zudosieren von Initiator gestartet. Als Initiator werden Radikal-Bildner wie die obengenannten verwendet.

Die Polymerisation wird vorzugsweise bei einer Temperatur von 60 bis 100°C durchgeführt. Nach dem Ende der Polymerisation wird die entstandene viskose Lösung langsam in heißes Wasser, das gegebenenfalls ein Dispergierhilfsmittel wie Orothan® (= Polydiisobuten-co-maleinsäureanhydrid-Natriumsalz), enthält, eingetragen und das Lösungsmittel abdestilliert.

Das nasse Polymerisat wird abfiltriert und im Vakuum getrocknet. Man erhält farblose bis schwach gelb gefärbte Polymerisate in Ausbeuten von 75 bis 95 % der Theorie.

Die entstandenen Copolymeren haben Molekulargewichte ($M_w$) von 20.000 bis 1.000.000, vorzugsweise von 100.000 bis 500.000 und Uneinheitlichkeiten $U_n = \left( \frac{M_w}{M_n} - 1 \right) = 1{,}0\text{-}10$.

Die Copolymeren können auf übliche Weise vulkanisiert werden, z.B. durch Peroxid oder durch Schwefel-Beschleuniger-Systeme. Die für Acrylatkautschuke übliche Zweitvulkanisation (15 Stunden) kann bei etwa 150 bis 170°C, (z.B. 165°C) in Heißluft durchgeführt werden.

Vulkanisationsmittel auf Basis von Hexamethylendiamincarbamat und Kalium-, Natrium-, Ammoniumsalzen der Benzoesäuren und höherer Fettsäuren (z.B. Stearate) können ebenfalls verwendet werden.

Die Vulkanisate der Copolymeren zeichnen sich bei guter Tieftemperaturflexibilität durch eine verbesserte Ölbeständigkeit aus.

Die Copolymeren zeichnen sich ferner durch gute Hitzestabilität und Beständigkeit gegenüber Oxidationsmitteln, z.B. gegenüber Ozon, Peroxiden usw. aus. Weiterhin sind sie gegenüber Ölen, z.B. Maschinenölen wie sie in der Kraftfahrzeugtechnik üblich sind, sehr beständig. Sie können z.B. zur Herstellung von Dichtungs-, Kabel-und Schlauchmaterial verwendet werden.

Die Copolymeren können mit üblichen Zusätzen wie verstärkenden und nicht verstärkenden Füllstoffen, Weichmachern, Stabilisatoren, Farbstoffen, Verarbeitungshilfsmitteln, Alterungsschutzmitteln, z.B. sterisch gehinderten Phenolen, Arylaminen, organischen Phosphiten und Vulkanisationsmitteln abgemischt werden.

## Beispiel 1

In einem bei 200° ausgeheizten 250 ml Dreihalskolben mit Rührvorrichtung, Innentemperaturthermometer und Inertgaseinlaß werden bei Raumtemperatur unter Stickstoff 76 ml (84,1 g, 747,2 mMol) Chlorbenzol eingefüllt und gerührt. Man fügt 3,9 mmol (0,59 g) Butylcyanacrylat, 243,5 mmol (31,2 g) Butylacrylat sowie 18,8 mg Azobisisobutyronitril hinzu. Unter ständigem Rühren erhöht man die Temperatur auf 60°C und läßt 8 h unter Inertgas polymerisieren. Anschließend führt man eine Wasserdampfdestillation durch und erhält in 90 %iger Ausbeute einen farblosen Kautschuk mit einem Molgewicht $M_w$ = 450.000 g/mol (GPC). Die Viskositätszahl $[\eta]$ beträgt $[\eta]_{Dichlormethan}$ = 129 $cm^3.g^{-1}$, THF, 25°C, Tg = -50 (DSC).

## Beispiel 2

Man arbeitet wie in Beispiel 1 beschrieben unter Einsatz von 225 mmol (32,06 ml, 28,8 g) Butylacrylat und 25 mmol (2,77 g) (2,5 ml) $\alpha$-Methylcyanacrylat. Die Ausbeute beträgt 92 % eines farblosen Kautschuks mit einem $M_w$ = 498.000 g/mol (GPC). Die Viskositätszahl $[\eta]$ beträgt 135 $cm^3.g^{-1}$ (Dichlormethan). Tg (DSC) = -49°C.

Beispiel 3

In einem bei 200°C ausgeheizten 250 ml Dreihalskolben mit Rührvorrichtung, Innenthermometer und Inertgaseinlaß werden bei Raumtemperatur unter Stickstoff 33 g (30 ml, 293,1 mMol) Chlorbenzol, 11,1 g (12,4 ml, 86,6 mMol) n-Butylacrylat, 3,45 g (3,1 ml, 31,05 mMol) Methylcyanacrylat, 0,45 g (0,5 ml, 3,74 mMol) Ethylidennorbornen und 37,6 mg (0,21 mMol) tert.-Butylperpivalat hinzugegeben. Unter ständigem Rühren erhöht man die Temperatur auf 70°C und läßt 18 h polymerisieren. Nach einer Wasserdampfdestillation erhält man in 85 %iger Ausbeute einen farblosen Kautschuk mit einem Molgewicht von $M_w$ = 400.000 g/mol. $U_n$ = 5,1, $[\eta]_{Dichlormethan}$ = 137 $cm^3.g^{-1}$ (25°C), Tg = -46°C.

Beispiel 4

In einen 12 l-Autoklav mit Rührvorrichtung, Innentemperaturkontrolle und Inertgaseinlaß werden bei Raumtemperatur 3 l vorgetrocknetes Chlorbenzol eingefüllt. Anschließend pumpt man 123 ml (117 g, 679,4 mMol) Butoxyethylacrylat, 859 ml (845 g, 5861 mMol) Ethoxyethylacrylat, 34,2 ml (37,8 g, 340 mMol) α-Cyanoacrylsäuremethylester bei Raumtemperatur hinzu. Zuletzt fügt man 0,6 g (3,65 mmol) Azobisisobutyronitril hinzu und erhöht im Autoklaven den Inertgasdruck auf 5 bar. Die Reaktionstemperatur wird dann, von der Raumtemperatur ausgehend, auf 70°C gesteigert. Die Polymerisationszeit beträgt 10 Stunden. Danach läßt man die klare, hohe viskose Lösungsmischung ab und fällt das Polymer in heißem Wasser, das 1,5 % Calciumchlorid und Orothan enthält. Die Polymeren werden unter Vakuum bei 60° 24 Stunden getrocknet. Man erhält in 90 %iger Ausbeute einen farblosen Kautschuk mit einem Molgewicht von $M_w$ = 320 000 g/mol, Mn = 60 000 g/mol, $U_n$ = 4,3, $[\eta]_{Dimethylacetamid}$ = 162 $cm^3.g^{-1}$ (bei 75°C), $[\eta]_{Dichlormethan}$ = 141 $cm^3.g^{-1}$ (bei 25°C), Tg = 48°C.

Beispiel 5

In einem 12 l-Autoklav mit Rührvorrichtung, Innentemperaturkontrolle und Inertgaseinlaß werden bei Raumtemperatur 5 l vorgetrocknetes Chlorbenzol vorgelegt. Dazu pumpt man 2410 ml (2165 g; 16,9 mol) Butylacrylat, 340 ml (375 g, 3,4 mol) α-Cyan-acrylsäuremethylester bei Raumtemperatur hinzu. Zuletzt fügt man 4,68 g (26,9 mMol) t-Butylperpivalat hinzu und erhöht im Autoklaven den Inertgasdruck auf 5 bar. Die Reaktionstemperatur wird dann, von der Raumtemperatur ausgehend, auf 70°C gesteigert. Die Polymerisationszeit beträgt 18 Stunden. Danach läßt man die klare, hoch viskose Lösungsmischung ab und fällt das Polymer in heißem Wasser, das 1,5 % Calciumchlorid und Orothan enthält. Die Polymeren werden unter Vakuum bei 60°C 24 h getrocknet. Man erhält in 85 %iger Ausbeute einen farblosen Kautschuk mit einem Molgewicht von

$M_w$ = 540 000 g/mol, $M_n$ = 65 000 g/mol, $U_n$ = 4, Tg = -47°C; $[\eta]_{Dichlormethan)}$ = 145 $cm^3.g^{-1}$ (bei 25°C).

Beispiel 6

In einem 12 l-Autoklaven mit Rührervorrichtung, Innentemperaturkontrolle und Inertgaseinlaß werden bei Raumtemperatur 3 l vorgetrocknetes Chlorbenzol vorgelegt. Dazu pumpt man 1376 ml (1350 g; 8,53 mol) Methoxybutylacrylat und 135,8 ml (150 g; 1,35 mol) α-Cyan-acrylsäuremethylester bei Raumtemperatur unter Inertgas ($N_2$) zu. Zuletzt fügt man 1,88 g (10,8 mMol) t-Butylperpivalat hinzu.

Die Reaktionstemperatur wird dann, von der Raumtemperatur ausgehend, innerhalb von 20 Minuten auf 70°C gesteigert. Die Polymerisationszeit beträgt 18 h. Nach Abkühlen läßt man die klare, hochviskose Polymerlösung ab und fällt das Polymer in heißem Wasser, das 50 ppm Poly(diisobuten-co-maleinsäureanhydrid)-natriumsalz, enthält. Das Polymerisat wird unter Vakuum bei 60°C 24 h getrocknet. Man erhält eine 75 bis 80 %ige Ausbeute.

Tg = -45°C, [η] Dichlormethan = 170 $cm^3.g^{-1}$ (bei 25°C).

Beispiel 7

In einem 12 l-Autoklaven mit Rührervorrichtung, Innentemperaturkontrolle und Inertgaseinlaß werden bei Raumtemperatur 3 l vorgetrocknetes Chlorbenzol vorgelegt. Dazu pumpt man 1350 ml (1350 g; 9,375 mol) Methoxypropylacrylat und 135,8 ml (150 g; 1,35 mol) α-Cyanacrylsäuremethylester bei Raumtemperatur zu. Zuletzt fügt man 1,88 g (1018 mMol) t-Butylperpivalat hinzu. Die Reaktionstemperatur wird dann, von der Raumtemperatur ausgehend, auf 70°C gesteigert. Die Polymerisationszeit beträgt 18 h. Nach Abkühlen läßt man die klare, hochviskose Mischung ab und fällt das Polymer in heißem Wasser, das 50 ppm Poly-(diisobutylen-co-maleinsäure)natriumsalz, enthält. Das Polymerisat wird unter Vakuum bei 60°C 24 h getrocknet. Man erhält eine 75 bis 80 %ige Ausbeute.

Tg = -21°C, $[\eta]$Dichlormethan = 150 $cm^3.g^{-1}$ (bei 25°C), $U_n$ = 5, $M_w$ = 500.000 g•$mol^{-1}$, $M_n$ = 60.000 g/mol

## Ansprüche

1. Copolymere hergestellt durch Copolymerisation von α-Cyanoacrylaten der Formel (I)

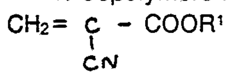

(I), in welcher

$R^1$ für $C_1$-$C_8$-Alkyl steht, das vorzugsweise mit einer Gruppe der Formel (III)

$-(R^4O)_n-R^5$ (III),

in welcher

$R^4$ für $C_1$-$C_4$-Alkylen,

$R^5$ für Wasserstoff oder $C_1$-$C_8$-Alkyl steht und

n für eine ganze Zahl von 1 bis 10 steht, vorzugsweise von 1 bis 4,

mit Acrylaten der Formel (II)

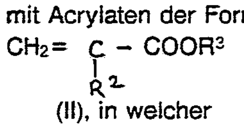

(II), in welcher

$R^2$ für Wasserstoff oder $C_1$-$C_8$-Alkyl steht und

$R^3$ die für $R^1$ bei Formel (I) angegebene Bedeutung hat.

2. Copolymere nach Anspruch 1, dadurch gekennzeichnet, daß sie 2,5 bis 100 Mol Acrylate der Formel (II) pro Mol α-Cyanacrylat der Formel (I) enthalten.

3. Copolymere nach Anspruch 1, dadurch gekennzeichnet, daß sie 0,5 bis 10 Gew.-% zusätzliches Co-Monomer mit reaktiven ungesättigten Gruppen enthalten.

4. Verfahren zur Herstellung von Copolymeren nach Anspruch 1, dadurch gekennzeichnet, daß α-Cyanacrylate der Formel (I) und α-Acrylate der Formel (II) und gegebenenfalls andere Co-Monomere nach Anspruch 3 in aprotischen Lösungsmitteln mit Radikalstartern polymerisiert werden.

5. Vulkanisate der Copolymeren des Anspruchs 1.

6. Verwendung von Copolymeren nach Anspruch 1 als thermoplastische Elastomere oder Kautschukmaterial.